# EUROPÄISCHE PATENTSCHRIFT

(11) **EP 3 331 661 B1**
(45) Veröffentlichungstag und Bekanntmachung des Hinweises auf die Patenterteilung: **21.10.2020**
(21) Anmeldenummer: 16751555.0
(22) Anmeldetag: 05.08.2016
(51) Int. Cl.: B23K 11/11, B23K 11/25, B23K 11/28, B23K 11/31, B23K 101/00, G01L 1/00

(54) **MESSEINRICHTUNG FÜR AUTOMATISIERTE SCHWEISSEINRICHTUNGEN, INSBESONDERE FÜR ROBOTER-SCHWEISSZANGEN**
MEASURING DEVICE FOR AUTOMATED WELDING EQUIPMENTS, IN PARTICULAR FOR ROBOTIC WELDING GUNS
DISPOSITIF DE MESUREMENT POUR INSTALLATIONS DE SOUDAGE, NOTAMMENT POUR MACHOIRES À SOUDER ROBOTIQUES

(30) Priorität: 05.08.2015 DE 102015214931
(43) Veröffentlichungstag der Anmeldung: 13.06.2018
(73) Patentinhaber: Inelta Sensorsysteme GmbH & Co. KG, 82024 Taufkirchen (DE)
(72) Erfinder: HEIMANN, Jochen, 85579 Neubiberg (DE); FIALA, Michael, 82229 Seefeld (DE)
(74) Vertreter: Hoefer & Partner Patentanwälte mbB
(86) Internationale Anmeldenummer: PCT/EP2016/068791
(87) Internationale Veröffentlichungsnummer: WO 2017/021544

(56) Entgegenhaltungen:
- DE-A1- 10 127 112
- DE-A1- 10 224 402
- GB-A- 2 134 267
- JP-A- S6 429 726
- JP-A- 2004 034 146
- US-A- 5 608 173

## Beschreibung

Die Erfindung betrifft eine Messeinrichtung gemäß dem Oberbegriff des Anspruchs 1.

Eine derartige Messeinrichtung ist aus der JP 2004 034146 A Z gekannt.

Schweißzangen, insbesondere zum Widerstandspunktschweißen, haben u.a. im Karosseriebau von Kraftfahrzeugen einen hohen Stellenwert, bei dem der Einsatz derartiger Schweißzangen (Roboter-Schweißzangen) einfach und flexibel ist.

Problematisch bei der Verwendung derartiger Schweißzangen ist jedoch, dass nicht rechtzeitig erkannte Fehler an den Schweißzangen oder falsche Prozessparameter beim Schweißen zu Produktionsausschuss oder fehlerhaften Teilen führen können.

Um derartige Fehler frühzeitig erkennen zu können, werden Messeinrichtungen verwendet, mit denen eine Kraftmessung des Fügevorganges durch Bestimmung der Krafteinleitung der Elektroden der Schweißzangen durchgeführt werden kann. Aus der DE 101 27 1 12 A1 ist ein Schweißkopf mit einer Zustellwelle und einer über einen Zylinder beweglichen Elektrode bekannt, bei dem zur Erfassung verschiedener Parameter ein Drucksensor vorgesehen ist. Aus der DE 102 24 402 A1 ist eine Schweißzange zum elektrischen Widerstandsschweißen mit zwei Elektroden bekannt, die einen Kraftsensor zur Erfassung eines Kraftwertes zwischen den beiden Elektroden aufweist. Durch die Anordnung dieses Sensors sollen Störkanten vermieden werden, wobei der Kraftsensor an einer der Elektrodenarmhalterungen angeordnet ist.

Aus DE 696 14 429 T2 ist ein Widerstandsschweiß-Sensoraufbau zur Überwachung von Parametern eines Widerstandsschweißverfahrens bekannt.

Aus der GB 2 134 267 A ist ein Messfühler bekannt, der eine Spule umfasst, die zwischen zwei Metallmembranteilen angeordnet und von diesen isoliert ist. Vorsprünge ragen von den Membranteilen in entgegengesetzte Enden einer Bohrung, die sich zentral innerhalb der Spule befindet. Die gegenüberliegenden Stirnflächen der Spule sind durch Isoliermaterial getrennt, das es den Vorsprüngen ermöglicht, sich aufeinander zu zu bewegen, wenn eine Last an den Membranteilen entlang der Achse der Spulenbohrung angelegt wird.

Es ist daher Aufgabe der vorliegenden Erfindung, eine Messeinrichtung für Roboter-Schweißzangen zu schaffen, die gegenüber bekannten Messeinrichtungen einfach und sicher gehandhabt werden kann.

Die Lösung dieser Aufgabe erfolgt durch die Merkmale des Anspruches 1.

Die Unteransprüche haben vorteilhafte Weiterbildungen der Erfindung zum Inhalt.

Die erfindungsgemäße Messeinrichtung weist ein Gehäuse/Elektronikgehäuse auf, das zum einen ein Halteteil zur temporären Fixierung einer Elektrode einer Schweißzange und zum anderen eine Kraftmesszelle umfasst, an der die zweite Elektrode der Schweißzange zur Anlage gebracht werden kann, um die Krafteinleitung der Elektroden der Schweißzange ermitteln zu können.

Vorteilhafterweise kann die erfindungsgemäße Messeinrichtung während einer Inbetriebnahme der Schweißzange oder auch während eines Service-Intervalls zum Einsatz kommen. Dadurch, dass die Messeinrichtung über das Halteteil temporär an einer der beiden Elektroden fixiert werden kann, ist es nicht nötig, dass eine Bedienperson während des eigentlichen Messvorganges, während dem die zweite Elektrode an die Kraftmesszelle angelegt wird, die Messeinrichtung von Hand halten muss, was für eine Bedienperson zum einen einfacher und zum anderen sicherer ist.

Vorteilhafterweise kann das Elektronikgehäuse der Messeinrichtung neben einem Aufnahmebereich für das Halteteil und die Kraftmesszelle ferner einen Aufnahmebereich für ein Elektronikfach umfassen, in dem eine für die Erfassung der Messwerte geeignete Elektronik-Platinenanordnung angeordnet werden kann, die über einen Kabelausgang mit einer Auswerteeinheit in Signalverbindung stehen kann.

Anstelle eines Aufnahmebereichs für ein Elektronikfach ist es auch möglich, den entsprechenden Bereich des Gehäuses als langgestreckten Handgriff auszubilden, der sich an das Halteteil anschließt und sich in Längsrichtung des Gehäuses erstreckt und die Elektronik-Platinenanordnung aufnehmen kann. Ein derartiger Handgriff kann auch als auswechselbares Teil vorgesehen werden, so dass es beispielsweise möglich wird, in derartigen Auswechselteilen unterschiedliche Elektronik-Platinenanordnungen zur Anpassung an unterschiedliche Rahmenbedingungen vorzusehen, so dass für die Anpassung lediglich der Handgriff ausgetauscht werden muss, falls eine Anpassung der Elektronik-Platinenanordnung erforderlich ist.

Bei einer weiteren besonders bevorzugten Ausführungsform der erfindungsgemäßen Messeinrichtung ist die Platinenanordnung mit einer Funkübertragungseinrichtung versehen und steht mit dieser in Wirkverbindung, wobei die Funkübertragungseinrichtung sowohl eine Sende- als auch eine Empfangs-Funktion umfassen kann. Eine derartige Ausführungsform kann sowohl im Elektronikfach wie auch im Handgriff angeordnet sein. Insbesondere diese Art von Platinenanordnung, wie auch die Elektronik-Platinenanordnung mit Kabelausgang, kann mit einer in der Messeinrichtung integrierten autarken Stromversorgung, wie beispielsweise einer Akkumulatoranordnung oder einer Batterieanordnung, mit Energie versorgt werden.

Ferner ist es möglich, die Kraftmesszelle mit sogenannten Lastknöpfen unterschiedlicher Ausbildung zu kombinieren. Unter einem derartigen Lastknopf versteht man eine Anordnung, die aus einem Anlagestück und einem Außengewindezapfen aufgebaut ist, der in ein Innengewinde der Kraftmesszelle eingeschraubt werden kann. Hiermit ist es möglich, Anlageflächen unterschiedlicher Kontur an der Kraftmesszelle anzubringen. Derartige Anlageflächen können flach bzw. eben, konkav oder konvex ausgebildet sein, je nachdem, wie die Form der an den Lastknopf anzulegenden Elektrode ist. Derartige Anpassungen können sinnvoll sei, da sich die Elektroden von Schweißzangen während ihres Betriebs abnutzen und somit ihre Form verändern können, so dass die Anpassung der Anlagefläche der Kraftmesszelle an die entsprechende sich ergebende Form der Elektrode eine genauere Kraftmessung sicherstellt.

Der Vorteil von mit der Kraftmesszelle kombinierbaren Lastknöpfen besteht darin, dass der Aufbau der Messeinrichtung an sich nicht verändert werden muss, sondern lediglich durch Austauschen der Lastknöpfe Anpassungen auf einfache Art und Weise an eine optimale Form zur Abstützung der jeweiligen Elektrode vorgenommen werden können.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine schematisch leicht vereinfachte perspektivische Darstellung einer Ausführungsform einer erfindungsgemäßen Messeinrichtung,
- Fig. 2: eine Seitenansicht der Messeinrichtung gemäß Fig. 1,
- Fig. 3 A, B: Schnittdarstellungen zweier Ausführungsformen der erfindungsgemäß en Messeinrichtung gemäß der Linie A-A in Fig. 2,
- Fig. 4: eine Draufsicht auf die Messeinrichtung gemäß Fig. 1,
- Fig. 5: eine Schnittdarstellung der Messeinrichtung entlang der Linie B-B in Fig. 4,
- Fig. 6: eine Darstellung einer weiteren Ausführungsform der erfindungsgemäßen Messeinrichtung, und
- Fig. 7 A bis 7C: schematisch stark vereinfachte Darstellungen von Lastknöpfen, die mit der erfindungsgemäßen Messeinrichtung kombinierbar sind.

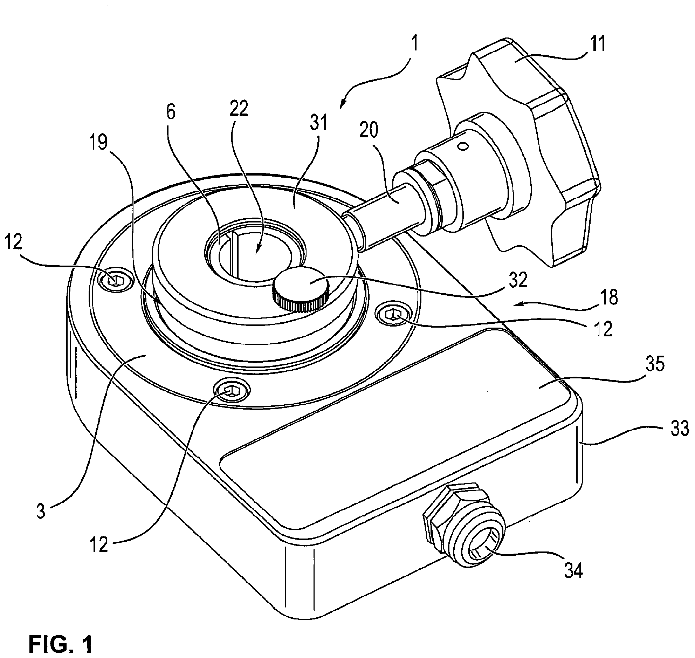

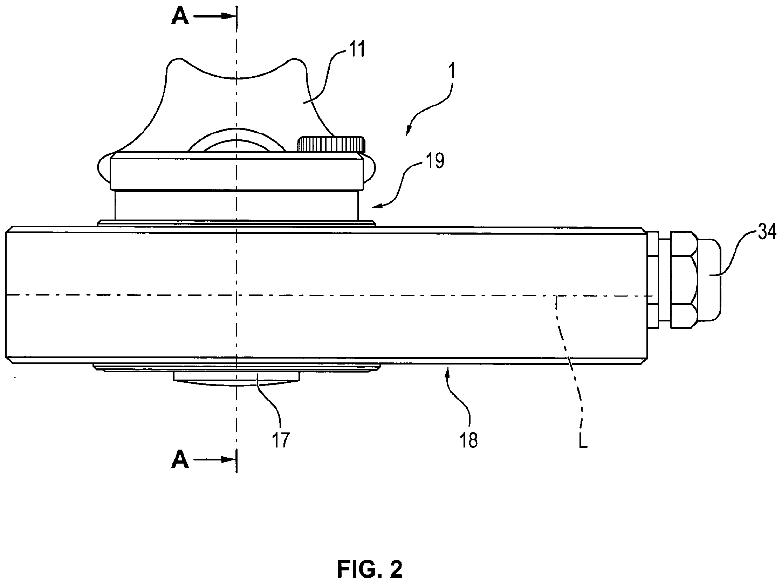

Aus einer Zusammenschau der Darstellung der Fig. 1 bis 5 ergibt sich der Aufbau und die Funktion einer erfindungsgemäßen Messeinrichtung 1 für Roboter-Schweißzangen, die in den Figuren jedoch nicht im Einzelnen dargestellt sind.

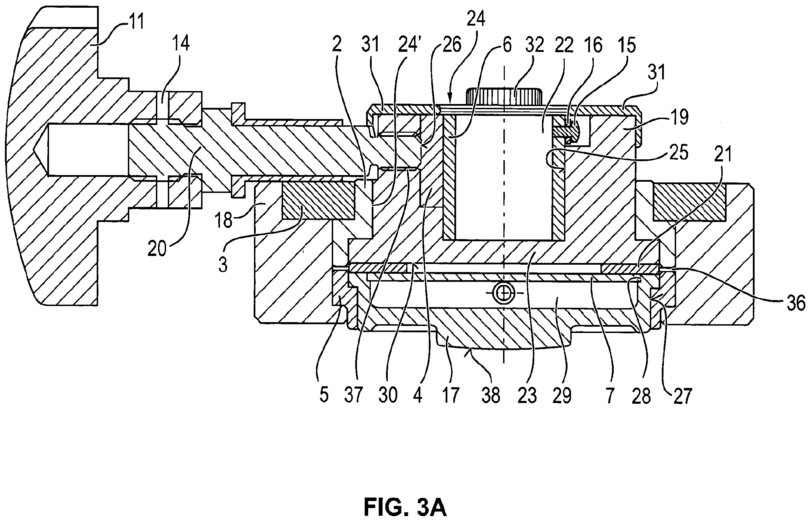

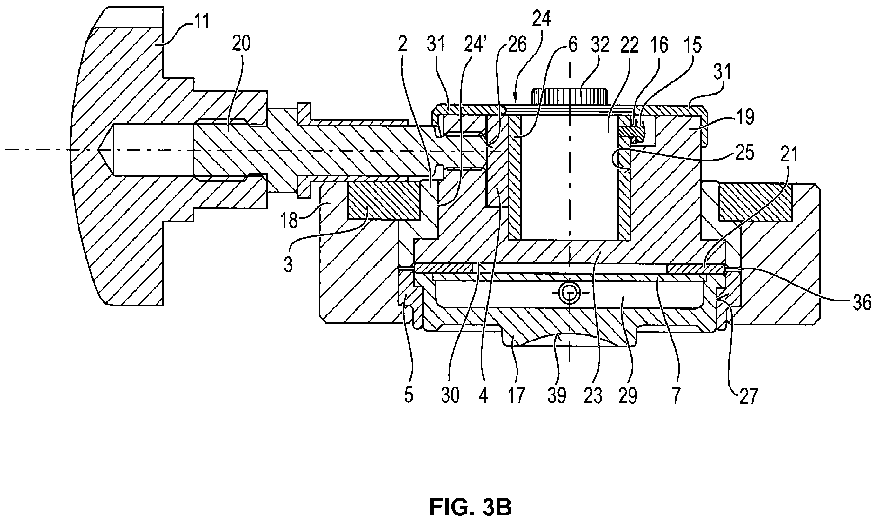

Die Messeinrichtung 1 weist ein Gehäuse/Elektronikgehäuse 18 auf. Wie vor allem die Schnittdarstellung der Fig. 3 verdeutlicht, ist in einem Bereich des Gehäuses 18 ein topfähnliches Halteteil 19 angeordnet, das gegenüber dem Gehäuse 18 mittels eines ersten Isolierringes 2 elektrisch isoliert ist. Der Isolierring 2 ist gestuft ausgebildet und umgibt eine entsprechend gestufte Außenkontur 24' des Halteteils 19, wie sich dies aus Fig. 3 erschließt. Das Halteteil 19 weist einen Aufnahmeraum 22 mit einer Bodenwand 23 auf. Der Aufnahmeraum 22 dient gemäß der Erfindung zur Aufnahme einer Elektrode einer Roboter-Schweißzange, die in diesem Aufnahmeraum 22 gemäß der Erfindung über eine Fixiereinrichtung 24 temporär zum Zwecke der Durchführung einer Messung festgelegt werden kann.

Gegenüber dem Halteteil 19, gemäß der in Fig. 3 gewählten Darstellung im unteren Bereich des Gehäuses 18, ist eine Kraftmesszelle 17 angeordnet. Die Kraftmesszelle 17 ist hierbei gegenüber der Bodenwand 23 im Gehäuse 18, beispielsweise über eine Schraubverbindung oder ähnliches, fixiert und ist mittels eines umfangsseitig angeordneten zweiten Isolierrings 5 sowie einer stirnseitig angeordneten Isolierscheibenanordnung 7, 21 gegenüber dem Gehäuse 18 elektrisch isoliert.

Wie Fig. 3A und 3B verdeutlichen, ist der zweite Isolierring 5 entsprechend einer gestuften Außenkontur 27 der Kraftmesszelle 17 ebenfalls gestuft ausgebildet und liegt umfangsseitig an der Außenkontur 27 der Kraftmesszelle an, um diese umfangsseitig gegenüber dem Gehäuse 18 elektrisch zu isolieren.

Die Isolierscheibenanordnung weist vorzugsweise eine erste Isolierscheibe 7 auf, die in eine stirnseitige, zur Bodenwand 23 weisende, Ringnut 28 der Kraftmesszelle 17 eingelegt ist. Dadurch deckt die erste Isolierscheibe 7 einen Zellenraum 29 vollflächig ab. Diese erste Isolierscheibe 7 ist für den Fall, dass die Kraftmesszelle 17 über eine Eigenisolation verfügt, nicht nötig.

Die Isolierscheibenanordnung weist ferner eine zweite Isolierscheibe 21 in Form eines Scheibenrings auf, der zwischen der Bodenwand 23 und der ersten Isolierscheibe 7 angeordnet ist und sowohl an der Isolierscheibe 7 als auch randseitig an einer Außenfläche 30 der Bodenwand 23 anliegt, wie die Fig. 3A und 3B dies im Einzelnen zeigen. Ein Spalt 36 zwischen aufeinander zuweisenden Stirnflächen des ersten Isolierrings 2 und des zweiten Isolierrings 5 verdeutlicht jedoch, dass diese beiden Isolierringe nicht aneinander anliegen, weil eine Kraftübertragung anzubringender Elektroden über die Isolierscheibe 21 stattfindet.

Die Fixiereinrichtung 24 weist einen im Aufnahmeraum 22 angeordneten, an einer Innenumfangsfläche 25 anliegenden Spannring 6 auf, der, wie vor allem Fig. 1 zeigt, geschlitzt ausgebildet ist.

Außenseitig liegt an diesem Spannring 6 ein Klemmstück 4 an, das wiederum mit einer Spannschraubenanordnung zusammenwirkt, die über eine Stirnfläche eines Schraubbolzens 20 am Klemmstück 4 anliegt. Die Spannschraubenanordnung weist neben dem Schraubbolzen 20 ferner eine Handhabe 11, insbesondere in Form eines Sterngriffs, auf, die mit dem Schraubbolzen 20 verbunden ist. Fig. 3 verdeutlicht für die Verbindung zwischen der Handhabe 11 und dem Schraubbolzen eine Ausnehmung 14, in die eine Klemmschraube oder ein Klemmbolzen oder ähnliche Verbindungselemente eingeführt werden können, um die Handhabe 11 mit dem Schraubbolzen 20 verdrehfest verbinden zu können. Endseitig ist der Schraubbolzen 20 in ein Innengewinde 37 des Halteteils 19 eingeschraubt und kann somit über das Klemmstück 4 den Spannring 6 aufgrund seiner geschlitzten Ausführung zusammendrücken, um eine in den Aufnahmeraum 22 eingeführte Elektrodenspitze temporär festzulegen.

Die Fig. 3A und 3B zeigen ferner eine Anordnung einer Innensechskantschraube 15 und einer gegebenenfalls vorgesehenen Beilagscheibe 16, die am Spannring 6 angebracht ist. Die Innensechskantschraube 15 dient als Positionierhilfe, so dass die Schlitzung des Spannrings 6 im 90°-Winkel zur Spannschraubenanordnung ausgerichtet ist. Ferner dient die Innensechskantschraube 15 auch als Verliersicherung für den Spannring 6 im Zusammenhang mit einem Deckel 31, der nachfolgend näher beschrieben werden wird.

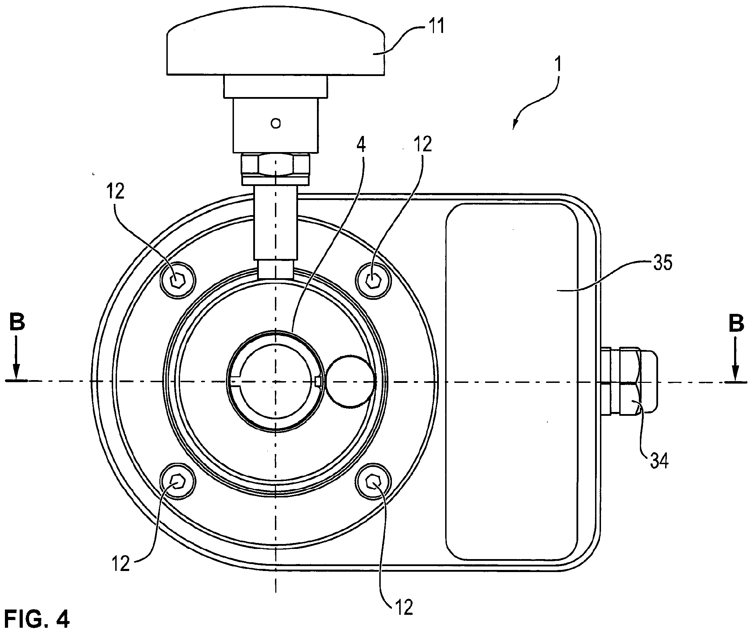

Wie sich ferner vor allem aus einer Zusammenschau der Fig. 1, 3A, 3B und 4 ergibt, ist das Halteteil 19 bei der hier dargestellten, besonders bevorzugten Ausführungsform mittels eines ringförmigen Anschraubflansches 3 mit dem Gehäuse 18 verbunden, wozu beispielsweise vier Innensechskantschrauben 12, wie Fig. 4 zeigt, verwendet werden können.

Vor allem die Fig. 1, 3A, 3B und 5 zeigen schließlich, dass das Halteteil 19 mit dem ringförmigen Deckel 31 versehen ist, der mit Hilfe einer unverlierbar am Deckel 31 gehaltenen Fixierschraube 32 lösbar am Halteteil 19 befestigt ist, um die im Halteteil 19 angeordneten Elemente gegen Herausfallen zu sichern.

Mit Hilfe dieser Anordnung ist es möglich, das Halteteil 19 drehbeweglich im Gehäuse 18 zu lagern, wobei das Halteteil 19 über die Handhabe 11 und den Schraubbolzen 20 verdreht werden kann.

Der Unterschied zwischen den Ausführungsformen der Fig. 3A und der Fig. 3B ist in der Ausgestaltung einer Anlagefläche der Kraftmesszelle 17 zu sehen. Bei der Ausführungsform gemäß Fig. 3A ist diese Anlagefläche mit der Bezugsziffer 38 gekennzeichnet und ist konvex ausgebildet, also nach außen bzw. von der Kraftmesszelle 17 weg gewölbt ausgebildet.

Bei der Ausführungsform gemäß Fig. 3B ist diese Anlagefläche mit der Bezugsziffer 39 gekennzeichnet und in diesem Falle konkav ausgebildet, also in Richtung auf die Kraftmesszelle 7 gewölbt.

Vom Prinzip her ist es auch möglich, die genannten Anlageflächen jeweils eben bzw. flach auszubilden.

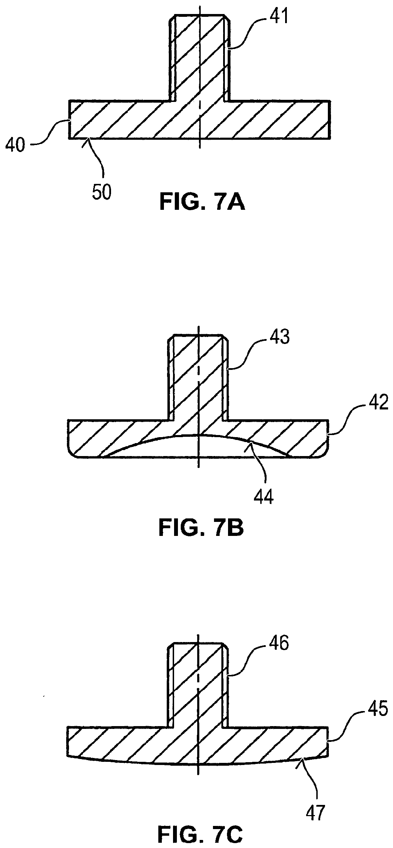

Dies ist wiederum in den Fig. 7A bis 7C verdeutlicht, wobei die Ausführungsform gemäß Fig. 7A einen Lastknopf 40 darstellt, der mit einem Außengewindestift 41 versehen ist und eine ebene bzw. flache Anlagefläche 50 aufweist.

Bei der Ausführungsform gemäß 7B ist ein Lastknopf 42 vorgesehen, der wiederum mit einem Außengewindestift 43 versehen ist. Die Anlagefläche 44 ist in diesem Falle jedoch konkav ausgebildet.

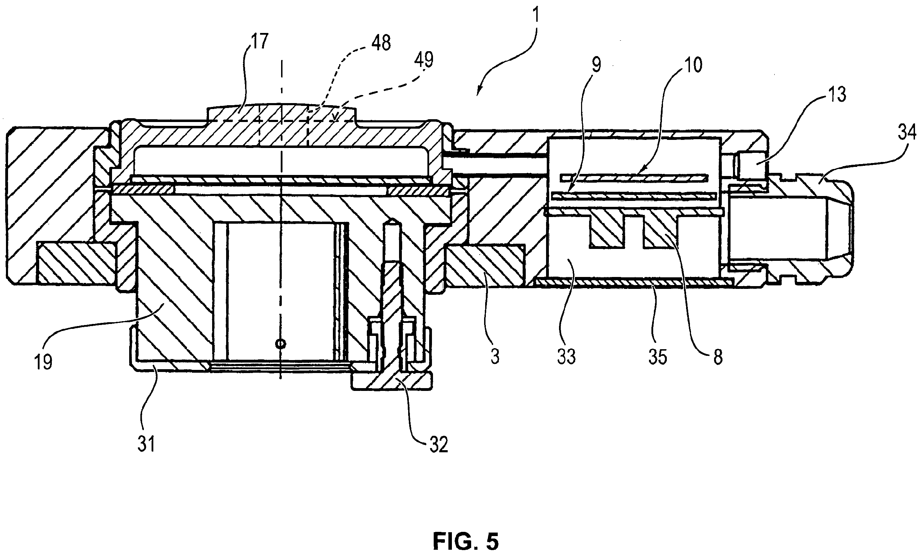

Die Ausführungsform gemäß Fig. 7C zeigt einen Lastknopf 45, der ebenfalls mit einem Außengewindestift 46 versehen ist und deren Anlagefläche 47 konvex ausgebildet ist. Die Außengewindestifte 41, 43 bzw. 46 können jeweils im Innengewinde der Kraftmesszelle 17 eingeschraubt werden, das in Fig. 5 strichliert dargestellt und mit der Bezugsziffer 48 gekennzeichnet ist. Werden die Anlageflächen durch die Lastknöpfe dargestellt, ist die entsprechende Fläche der Kraftmesszelle 47 eben ausgebildet, was in Fig. 5 durch die zweite strichlierte Linie 49 symbolisiert dargestellt ist.

Vom Prinzip her ist es natürlich möglich, anstelle der Lastknöpfe Kraftmesszellen zur Verfügung zu stellen, die entsprechend angepasste Anlageflächen aufweisen, also werkseitig mit flachen, konkaven oder konvexen Anlageflächen ausgebildet sind, falls dies für den jeweiligen Anwendungsfall geeignet ist.

Vor allem die Fig. 4 und 5 verdeutlichen ferner, dass das Gehäuse/Elektronikgehäuse 18 mit einem Elektronikfach 33 versehen ist, das benachbart zum Halteteil 19 angeordnet ist. Im Elektronikfach 33 ist eine Platinenanordnung, im Beispielsfalle bestehend aus den Platinen 8, 9 und 10, angeordnet, die mit der Kraftmesszelle 17 in Signalverbindung stehen können und die über einen Kabelausgang 34 mit einer Auswerteeinheit signalverbunden werden können.

Das Elektronikfach 33 kann mittels eines Deckels 35, der vorzugsweise lösbar ist, verschlossen werden.

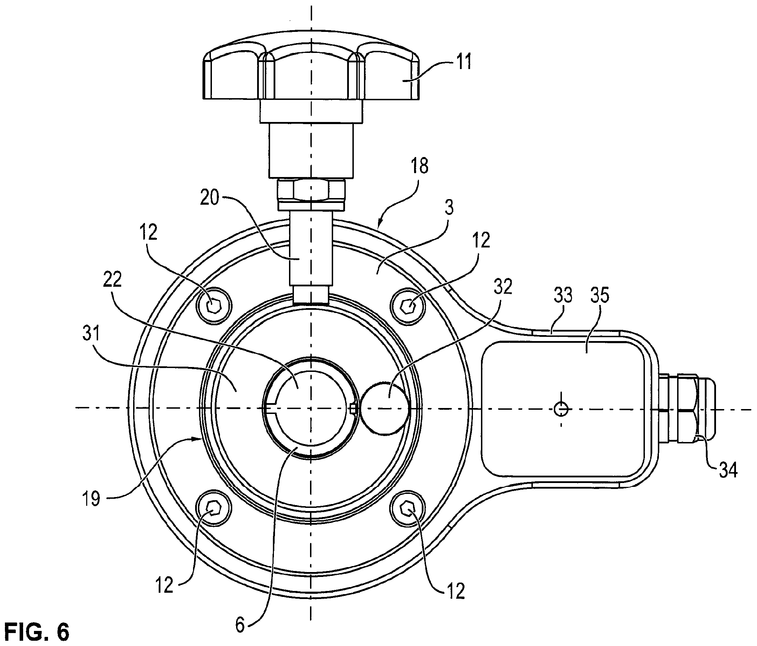

Fig. 6 verdeutlicht eine der Fig. 1 entsprechende Darstellung einer weiteren Ausführungsform der Messeinrichtung 1, bei der alle Merkmale, die derjenigen der Fig. 1 entsprechen mit denselben Bezugsziffern gekennzeichnet sind.

Der Unterschied zur Ausführungsform gemäß Fig. 1 ist in der Ausbildung des Elektronikfachs 33 zu sehen, das bei dieser Ausführungsform als Handgriff ausgebildet ist, wobei ein Vergleich der Fig. 1 und 6 verdeutlicht, dass diese Ausbildung als Handgriff durch eine schmalere Ausbildung des Elektronikfachs 33 erreichbar ist.

Um einen Messvorgang mit der erfindungsgemäßen Messeinrichtung 1 durchführen zu können, wird, wie gesagt, eine Elektrode einer Roboter-Schweißzange in den Aufnahmeraum 22 eingeführt und in diesem mittels der Fixiereinrichtung 24 temporär festgelegt. Durch dieses Festlegen ist die Messeinrichtung 1 in der Roboter-Schweißzange zum Zwecke des Messvorganges fixiert, ohne dass eine Bedienperson die Messeinrichtung 1 festhalten müsste. Nach dem Fixiervorgang wird die zweite Elektrode an die Kraftmesszelle 17 herangeführt, um den Krafteintrag der beiden Elektroden aufnehmen zu können, der dann beispielsweise zum Zwecke der Überwachung oder zum Zwecke der Justierung oder zum Zwecke der Fehlerbehebung bzw. Fehlererkennung verwendet werden kann.

Neben der vorstehenden schriftlichen Beschreibung der Erfindung wird zu deren ergänzender Offenbarung hiermit explizit auf die zeichnerische Darstellung der Erfindung in den Fig. 1 bis 7C Bezug genommen.

### Bezugszeichenliste

- 1: Messeinrichtung
- 2: Isolierring
- 3: Anschraubflansch
- 4: Klemmstück
- 5: Isolierring
- 6: Spannring
- 7: Isolierscheibe
- 8-10: Platinen
- 11: Handhabe/Sterngriff
- 12: Innensechskantschraube
- 13: Madenschraube
- 14: Spannhülse
- 15: Innensechskantschraube
- 16: Beilagscheibe
- 17: Kraftmesszelle
- 18: Gehäuse/Elektronikgehäuse
- 19: Halteteil
- 20: Gewindebolzen
- 21: Isolierscheibe
- 22: Aufnahmeraum
- 23: Bodenwand
- 24: Fixiereinrichtung
- 24': Außenkontur
- 25: Innenumfangsfläche
- 26: Stirnfläche
- 27: Außenkontur
- 28: Nut
- 29: Zellenraum
- 30: Außenfläche
- 31: Deckel
- 32: Fixierschraube
- 33: Elektronikfach
- 34: Kabelausgang
- 35: Deckel
- 36: Spalt
- 37: Innengewinde
- 38, 39, 44, 47, 49, 50: Anlagefläche
- 40, 42, 45: Lastknöpfe
- 41, 43, 46: Außengewindestifte
- 48: Innengewinde
- L: Längsrichtung des Gehäuses 18

## Patentansprüche

1. Messeinrichtung (1) für automatisierte Schweisseinrichtungen, insbesondere für Roboter-Schweißzangen
- mit einem Gehäuse (18);
- mit einem Halteteil (19),
• das im Gehäuse (18) fixiert und gegenüber dem Gehäuse (18) mittels eines ersten Isolierrings (2) isoliert ist, und
• mit einem Aufnahmeraum (22) zur Aufnahme einer Elektrode der Schweisseinrichtung mit einer Bodenwand (23) und einer Fixiereinrichtung (24) zur temporären Festlegung der Elektrode zum Zwecke der Durchführung einer Messung, und
- mit einer Kraftmesszelle (17),
• die im Gehäuse (18) gegenüber der Bodenwand (23) fixiert ist, und
• die mittels eines umfangsseitigen zweiten Isolierrings (5) und einer stirnseitigen, der Bodenwand (23) benachbarten Isolierscheibenanordnung (7, 21) gegenüber dem Gehäuse (18) isoliert ist.

2. Messeinrichtung nach Anspruch 1, **dadurch gekennzeichnet, dass** der erste Isolierring (2) entsprechend einer gestuften Außenkontur (24') des Halteteils (19) gestuft ausgebildet ist.

3. Messeinrichtung nach Anspruch 1 oder 2, **dadurch gekennzeichnet, dass** die Fixiereinrichtung (24) einen im Aufnahmeraum (22) angeordneten, an eine Innenumfangsfläche (25) anliegenden Spannring (6) aufweist, der über ein außenseitig an ihm anliegendes Klemmstück (4) mit einer Spannschraubenanordnung (11, 20) zusammenwirkt, die über eine Stirnfläche (26) eines Schraubbolzens (20) am Klemmstück (4) anliegt.

4. Messeinrichtung nach Anspruch 3, **dadurch gekennzeichnet, dass** die Schraubbolzenanordnung eine Handhabe (11), insbesondere in Form eines Sterngriffs, aufweist, die mit dem Schraubbolzen (20) verbunden ist.

5. Messeinrichtung nach Anspruch 3 oder 4, **dadurch gekennzeichnet, dass** der Spannring (6) geschlitzt ist.

6. Messeinrichtung nach einem der Ansprüche 1 bis 5, **dadurch gekennzeichnet, dass** das Halteteil (19) mittels einer Flanschanordnung (3, 12) am Gehäuse (18) fixiert ist.

7. Messeinrichtung nach einem der Ansprüche 1 bis 6, **dadurch gekennzeichnet, dass** der zweite Isolierring (5) entsprechend einer gestuften Außenkontur (27) der Kraftmesszelle (17) gestuft ausgebildet ist.

8. Messeinrichtung nach einem der Ansprüche 1 bis 7, **dadurch gekennzeichnet, dass** die Isolierscheibenanordnung folgendes aufweist:
- eine erste Isolierscheibe (7), die in eine stirnseitige, zur Bodenwand (23) weisende Ringnut (28) der Kraftmesszelle (17) eingelegt ist und einen Zellenraum (9) abdeckt, und
- eine zweite Isolierscheibe (21) in Form eines Scheibenrings, der zwischen der Bodenwand (23) und der ersten Isolierscheibe (7) angeordnet ist und sowohl an der ersten Isolierscheibe (7) als auch randseitig an einer Außenfläche (30) der Bodenwand (23) anliegt.

9. Messeinrichtung nach einem der Ansprüche 1 bis 8, **dadurch gekennzeichnet, dass** das Halteteil (19) drehbeweglich im Gehäuse (18) gelagert ist.

10. Messeinrichtung nach einem der Ansprüche 3 bis 9, **dadurch gekennzeichnet, dass** auf dem Halteteil (19) ein ringförmiger Deckel (31) mittels einer unverlierbar am Deckel (31) gehaltenen Fixierschraube (32) lösbar befestigt ist.

11. Messeinrichtung nach einem der Ansprüche 1 bis 10, **dadurch gekennzeichnet, dass** das Gehäuse (18) ein Elektronikfach (33), benachbart zum Halteteil (19) aufweist, das vorzugsweise als Handgriff ausgebildet ist, der sich in Längsrichtung (L) des Gehäuses (18) erstreckt, und das vorzugsweise eine Platinenanordnung (8, 9, 10) aufweist und vorzugsweise mit einem Kabelausgang (34) versehen ist, wobei das Elektronikfach (33) vorzugsweise mittels eines lösbaren Deckels (35) verschlossen ist.

12. Messeinrichtung nach Anspruch 11, **dadurch gekennzeichnet, dass** die Kraftmesszelle (17) mit der Platinenanordnung (8, 9, 10) in Signalverbindung steht.

13. Messeinrichtung nach einem der Ansprüche 11 oder 12, **dadurch gekennzeichnet, dass** die Platinenanordnung (8, 9, 10) mit einer Funkübertragungseinrichtung in Wirkverbindung steht.

14. Messeinrichtung nach einem der Ansprüche 11, 12 oder 13, **dadurch gekennzeichnet, dass** eine integrierte autarke Stromversorgung für die Platinenanordnung (8, 9, 10) im Gehäuse (18) vorgesehen ist.

15. Messeinrichtung nach einem der Ansprüche 1 bis 14, **gekennzeichnet durch** an den Anwendungsfall angepasste Anlageflächen (38, 39, 44, 47, 49) der Kraftmesszelle (17), die eben, konkav oder konvex ausbildbar sind.

## Claims

1. A measuring device (1) for automated welding equipment, in particular for robotic welding guns,
- having a housing (18);
**characterised by**:
- a holding part (19),
• fixed in the housing (18) and insulated from the housing (18) by means of a first insulating ring (2), and
• having a receiving space (22) for receiving an electrode of the welding equipment with a base wall (23) and a fixing device (24) for temporary fixing of the electrode for the purpose of performing a measurement, and
- a load cell (17),
• fixed in the housing (18) opposite the base wall (23), and
• isolated from the housing (18) by means of a circumferential second insulating ring (5) and a front-face insulating disc assembly (7, 21) adjacent to the base wall (23).

2. The measuring device according to claim 1, **characterised in that** the first insulating ring (2) is designed in a stepped manner corresponding to a stepped outer contour (24') of the holding part (19).

3. The measuring device according to claim 1 or 2, **characterised in that** the fixing device (24) has a clamping ring (6) arranged in the receiving space (22) abutting an inner circumferential surface (25), which, via an externally abutting clamping piece (4), cooperates with a clamping screw assembly (11, 20) abutting the clamping piece (4) via a front face (26) of a screw bolt (20).

4. The measuring device according to claim 3, **characterised in that** the screw bolt assembly has a handle (11), in particular in the form of a star grip, connected with the screw bolt (20).

5. The measuring device according to claim 3 or 4, **characterised in that** the clamping ring (6) is slit.

6. The measuring device according to any one of claims 1 to 5, **characterised in that** the holding part (19) is fixed to the housing (18) by means of a flange assembly (3, 12).

7. The measuring device according to any one of claims 1 to 6, **characterised in that** the second insulating ring (5) is designed in a stepped manner corresponding to a stepped outer contour (27) of the load cell (17).

8. The measuring device according to any one of claims 1 to 7, **characterised in that** the insulating disc assembly comprises the following:
- a first insulating disc (7) inserted into a front-face annular groove (28) of the load cell (17) facing towards the base wall (23) and covering a cell space (9), and
- a second insulating disc (21) in the form of a disc ring arranged between the base wall (23) and the first insulating disc (7) and abutting the first insulating disc (7) as well as marginally abutting an outer surface (30) of the base wall (23).

9. The measuring device according to any one of claims 1 to 8, **characterised in that** the holding part (19) is rotatably mounted in the housing (18).

10. The measuring device according to any one of claims 3 to 9, **characterised in that** an annular lid (31) is detachably fastened on the holding part (19) by means of a fixing screw (32) captively retained at the lid (31).

11. The measuring device according to any one of claims 1 to 10, **characterised in that** the housing (18) has an electronics compartment (33) adjacent to the holding part (19), which is preferably designed as a handgrip extending in the longitudinal direction (L) of the housing (18), and preferably having a circuit board assembly (8, 9, 10) and preferably provided with a cable outlet (34), wherein the electronics compartment (33) is preferably closed by means of a detachable lid (35).

12. The measuring device according to claim 11, **characterised in that** the load cell (17) is connected in signal communication with the circuit board assembly (8, 9, 10).

13. The measuring device according to any one of claims 11 or 12, **characterised in that** the circuit board assembly (8, 9, 10) is operatively connected with a radio transmission device.

14. The measuring device according to any one of claims 11, 12, or 13, **characterised in that** an integrated self-sufficient power supply for the circuit board assembly (8, 9, 10) is provided in the housing (18).

15. The measuring device according to any one of claims 1 to 14, **characterised by** abutment surfaces (38, 39, 44, 47, 49) of the load cell (17) adapted to the application case, which can be designed flat, concave or convex.

## Revendications

1. Dispositif de mesure (1) pour des systèmes de soudage automatisés, en particulier pour des pinces porte-électrode robotisées
- avec un boîtier (18) ;
**caractérisé par** :
- une partie de maintien (19),
• qui est fixée dans le boîtier (18) et est isolée par rapport au boîtier (18) au moyen d'une première bague d'isolation (2), et
• avec un espace de réception (22) pour la réception d'une électrode du dispositif de soudage avec une paroi de fond (23) et un système de fixation (24) pour la fixation temporaire de l'électrode à des fins de réalisation d'une mesure, et
- une cellule de mesure de force (17),
• qui est fixée dans le boîtier (18) par rapport à la paroi de fond (23), et
• qui est isolée au moyen d'une seconde bague d'isolation (5) côté périphérie et d'un agencement de disque d'isolation (7, 21) côté avant, contigu à la paroi de fond (23) par rapport au boîtier (18).

2. Dispositif de mesure selon la revendication 1, **caractérisé en ce que** la première bague d'isolation (2) est réalisée de manière étagée selon un contour extérieur (24') étagé de la partie de maintien (19).

3. Dispositif de mesure selon la revendication 1 ou 2, **caractérisé en ce que** le système de fixation (24) présente un anneau de serrage (6) reposant contre une surface périphérique intérieure (25), agencé dans l'espace de réception (22) qui coagit par le biais d'une pièce de serrage (4) reposant côté extérieur contre celui-ci avec un agencement de vis de serrage (11, 20) qui repose par le biais d'une surface avant (26) d'un boulon fileté (20) contre la pièce de serrage (4).

4. Dispositif de mesure selon la revendication 3, **caractérisé en ce que** l'agencement de boulon fileté présente une poignée (11), en particulier sous la forme d'une poignée en étoile qui est reliée au boulon fileté (20).

5. Dispositif de mesure selon la revendication 3 ou 4, **caractérisé en ce que** l'anneau de serrage (6) est fendu.

6. Dispositif de mesure selon l'une des revendications 1 à 5, **caractérisé en ce que** la partie de maintien (19) est fixée au moyen d'un agencement de bride (3, 12) au boîtier (18).

7. Dispositif de mesure selon l'une des revendications 1 à 6, **caractérisé en ce que** la seconde bague d'isolation (5) est réalisée de manière étagée selon un contour extérieur (27) étagé de la cellule de mesure de force (17).

8. Dispositif de mesure selon l'une des revendications 1 à 7, **caractérisé en ce que** l'agencement de disque d'isolation présente ce qui suit :
- un premier disque d'isolation (7) qui est introduit dans une rainure annulaire (28), tournée vers la paroi de fond (23) côté avant, de la cellule de mesure de force (17) et recouvre un espace de cellule (9), et
- un second disque d'isolation (21) sous la forme d'un anneau de disque qui est agencé entre la paroi de fond (23) et le premier disque d'isolation (7) et la paroi de fond (23) repose non seulement contre le premier disque d'isolation (7) mais aussi côté bord contre une surface extérieure (30).

9. Dispositif de mesure selon l'une des revendications 1 à 8, **caractérisé en ce que** la partie de maintien (19) est logée de manière mobile en rotation dans le boîtier (18).

10. Dispositif de mesure selon l'une des revendications 3 à 9, **caractérisé en ce qu'**un couvercle (31) annulaire est fixé de manière amovible sur la partie de maintien (19) au moyen d'une vis de fixation (32) maintenue de manière imperdable sur le couvercle (31).

11. Dispositif de mesure selon l'une des revendications 1 à 10, **caractérisé en ce que** le boîtier (18) présente un compartiment électronique (33), de manière contiguë à la partie de maintien (19), qui est réalisé de préférence comme poignée qui s'étend dans le sens longitudinal (L) du boîtier (18), et qui présente de préférence un agencement de platine (8, 9, 10) et est de préférence pourvu d'une sortie de câble (34), dans lequel le compartiment électronique (33) est de préférence fermé au moyen d'un couvercle (35) amovible.

12. Dispositif de mesure selon la revendication 11, **caractérisé en ce que** la cellule de mesure de force (17) est en liaison de signal avec l'agencement de platine (8, 9, 10).

13. Dispositif de mesure selon l'une des revendications 11 ou 12, **caractérisé en ce que** l'agencement de platine (8, 9, 10) est en liaison active avec un système de radiotransmission.

14. Dispositif de mesure selon l'une des revendications 11, 12 ou 13, **caractérisé en ce qu'**une alimentation en courant autonome intégrée pour l'agencement de platine (8, 9, 10) est prévue dans le boîtier (18).

15. Dispositif de mesure selon l'une des revendications 1 à 14, **caractérisé par** des surfaces d'appui (38, 39, 44, 47, 49), adaptées au cas d'application, de la cellule de mesure de force (17) qui sont réalisables de manière plane, concave ou convexe.
